# EUROPÄISCHE PATENTSCHRIFT

(11) **EP 3 243 055 B1**
(45) Veröffentlichungstag und Bekanntmachung des Hinweises auf die Patenterteilung: **30.10.2019**
(21) Anmeldenummer: 16700021.5
(22) Anmeldetag: 05.01.2016
(51) Int. Cl.: G01L 5/28, G09B 9/05, G01M 17/007

(54) **VERFAHREN ZUM BETRIEB EINES FAHRSIMULATORS**
METHOD FOR OPERATING A DRIVING SIMULATOR
PROCÉDÉ POUR FAIRE FONCTIONNER UN SIMULATEUR DE CONDUITE

(30) Priorität: 08.01.2015 DE 102015200157
(43) Veröffentlichungstag der Anmeldung: 15.11.2017
(73) Patentinhaber: AVL List GmbH, 8020 Graz (AT)
(72) Erfinder: SCHAGERL, Gerhard, 8045 Graz (AT); SCHOEGGL, Peter, 8151 Hitzendorf (AT); SCHEUCHER, Rupert, 8051 Graz (AT); THALER, Ull, 8010 Graz (AT); PAURITSCH, Juergen, 8053 Graz (AT); PETZNER, Florian, 8862 Stadl an der Mur (AT)
(74) Vertreter: Wallinger, Michael
(86) Internationale Anmeldenummer: PCT/EP2016/050078
(87) Internationale Veröffentlichungsnummer: WO 2016/110488

(56) Entgegenhaltungen:
- EP-A2- 0 360 996
- CN-A- 103 926 082
- DE-A1- 19 505 533
- DE-A1- 19 742 627
- US-A- 5 323 644
- US-A1- 2014 297 098

## Beschreibung

Die Erfindung betrifft eine Vorrichtung zum Prüfen von Bremsen, welche einen Prüfstand und einen Fahrsimulator aufweist, sowie ein Verfahren zum Betrieb eines solchen Fahrsimulators.

Unter einem Fahrsimulator im Sinne der vorliegenden Erfindung sind Vorrichtungen zu verstehen, mit denen sich Fahrbetriebe unterschiedlichster Fahrzeuge in möglichst realistischer Weise simulieren lassen. Typischerweise dienen derartige Vorrichtungen zur Simulation des Fahrbetriebs von Straßenfahrzeugen, insbesondere von Rennwagen. Grundsätzlich kann ein Fahrsimulator im Sinne der Erfindung aber auch bei anderen Fahrzeugen zum Einsatz kommen.

Im Bereich des Rennsports, in welchem die Trainingszeiten im realen Fahrzeug im Allgemeinen streng reglementiert sind, lassen sich neue Entwicklungen mit Hilfe von Fahrsimulatoren kostengünstig testen und Kurse bekannter Rennstrecken im Vorfeld eines Rennens oder der Saison unabhängig von zusätzlichen Trainingsläufen einüben. Weitere Anwendungsbereiche eines erfindungsgemäßen Fahrsimulators sowie der erfindungsgemäßen Vorrichtung zum Prüfen von Bremsen liegen in den Bereichen der Fahrzeugentwicklung, Verkehrssicherheit, Mobilität, integralen Sicherheit, der Fahrerassistenzsysteme und der automobilen Grundlagenforschung.

Im Allgemeinen verfügen Fahrsimulatoren über eine Bildwiedergabeeinrichtung zur Darstellung einer realen oder computergenerierten Ansicht der Umgebung des Fahrzeugs. Hierbei kommen vorzugsweise Methoden der virtuellen Realität zum Einsatz, um einem Fahrer in dem Fahrsimulator ein möglichst realen Eindruck der Umgebung zu vermitteln. Der Fahrer befindet sich dabei im Allgemeinen in einem Cockpit mit Sitz, Instrumentenbrett, Steuerelementen mit Kraftrückkopplung, Rückspiegel und/oder sonstigen Bedienelementen, einer sogenannten Sitzkiste. Eine solche Sitzkiste kann entweder generisch oder gegebenenfalls typenspezifisch ausgeführt sein und ergonomisch und funktional dem Cockpit eines realen Pkw entsprechen. Dies beinhaltet z. B. die Sicht durch die Front- und Seitenscheiben, die Innen- und Außenspiegel sowie die entsprechenden Merkmale der Pkw-Karosserie (z. B. A- und B-Säulen, Mittelkonsole, Innenraum, Tür von innen, etc.).

Vorzugsweise ist eine solche Sitzkiste fest, insbesondere starr, mit einer Bewegungsvorrichtung des Fahrsimulators verbunden, welcher eine aktiv gesteuerte oder geregelte Bewegung der Sitzkiste um vorbestimmte Freiheitsgrade gegenüber einem Maschinengestell des Fahrsimulators zulässt. Vorzugsweise kann in dem Fahrsimulator ein ganzes Fahrzeug oder wenigstens Teile der Karosserie eines Fahrzeugs installiert werden, um eine möglichst detailgetreue Simulation für den Fahrer zu ermöglichen.

Weiter vorzugsweise weisen Fahrsimulatoren Mittel für eine akustische Nachbildung einer Umgebung eines Fahrzeugs auf. Diese akustische Nachbildung, insbesondere mittels einer Vielzahl von Lautsprechern, erlaubt es, die dem Fahrer dargestellte virtuelle Realität auch in Bezug auf die akustische Wahrnehmung zu vervollkommnen.

Solche Fahrsimulatoren sind in verschiedenen Ausbildungen im Stand der Technik bekannt:
Die AT 514 404 A2 beschreibt einen Fahrsimulator mit einem Maschinengestell, das über drei, bevorzugt vier oder mehr Radbaugruppen auf einem Untergrund verfahrbar ist, wobei die Radbaugruppen jeweils zumindest ein auf dem Untergrund verfahrbares Rad umfassen, das um eine Längsachse drehbar angeordnet ist, wobei das Maschinengestell mit einer Steuerung gekoppelt ist, die einen Sitz für eine Person sowie Bedienelemente zur Steuerung des Fahrsimulators umfasst.

Die DE 20 2012 006 551 U,1 beschreibt einen Fahrsimulator zur Bewegungssimulation eines Kraftfahrzeugs, umfassend eine Bodenplatte, auf der ein Versuchsfahrzeug abstellbar ist sowie mehrere an der Bodenplatte angeordnete und mit dem Versuchsfahrzeug in Verbindung stehende Aktoren zur Simulation von Vertikal- und/oder Längs- und/oder Querbeschleunigung und/oder Nick- und/oder Rollwinkel des Versuchskraftfahrzeugs, wobei die Aktoren über mindestens eine am Unterboden des Versuchskraftfahrzeugs befestigbare Adapterplatte in dem Versuchskraftfahrzeug in Wirkverbindung stehen.

Die DE 10 2009 000 929 A1 beschreibt einen Fahrsimulator, welcher aus einem Cockpit mit einem Sitz für einen Fahrer und mit Bedienelementen eines Fahrzeugs, einem Sichtsystem zur Darstellung der während des Simulationsbetriebs für den Fahrer sichtbaren Umgebung des fahrenden Fahrzeugs, einer Einhausung, mit der der Fahrer von optischen Einflüssen von außerhalb des Fahrsimulators abschirmbar ist, und einem Bewegungssystem zur gemeinsamen Bewegung des Cockpits, des Sichtsystems und der Einhausung relativ zu einer Aufstandsfläche des Fahrsimulators. Die US 5,323,644 betrifft einen Straßensimulator mit Traktionskontrolle, welcher elektrische Motoren aufweist, die ein kontrolliertes Drehmoment auf die Achsen eines Testfahrzeugs ausüben können. Durch zwischen den elektrischen Motoren und den Achsen angeordnete Bremsen können schnelle Wechsel von Straßenoberflächen mit unterschiedlichen Reibungskoeffizienten simuliert werden. Zudem ist ein Computer vorgesehen, der mit einem die Motoren mit Leistung versorgenden Leistungsverstärker über eine elektrisch leitende Verbindung verbunden ist. Dabei kann der Computer die Trägheit von Komponenten des Testfahrzeugs simulieren.

Weiter sind im Stand der Technik Fahrzeugprüfstände bekannt, mit welchen die Bremsfunktion geprüft werden kann. So offenbart die DE 10 2007 012 545 A1 ein Fahrzeugprüfstand, bei welchem ein Fahrzeug auf Rollen angeordnet ist. Der Prüfstand weist eine Einrichtung zur automatisierten Pedalbetätigung auf, welche zur Betätigung des Bremspedals benutzt werden kann, um automatisierte Bremsentests durchzuführen.

Vor dem Hintergrund des Standes der Technik ist es eine Aufgabe der Erfindung, eine Vorrichtung zum Prüfen einer Bremsanlage bereitzustellen, welche die Bremsfunktion von einer oder allen Bremsen unter möglichst realistischen Bedingungen durchführen kann und Daten erzeugt, welche zum Betrieb eines Fahrsimulators verwendet werden können. Die Erfindung betrifft des Weiteren ein Verfahren zum Betrieb eines Fahrsimulators anhand dieser Daten.

Diese Aufgabe wird durch ein Verfahren zum Betrieb eines Fahrsimulators nach Anspruch 1 und eine Vorrichtung zum Prüfen von Bremsen nach Anspruch 13 gelöst. Vorteilhafte Ausgestaltungen werden in den Unteransprüchen beansprucht. Der Wortlaut der Ansprüche wird durch ausdrückliche Bezugnahme zum Inhalt der Beschreibung gemacht.

Das erfindungsgemäße Verfahren zum Betrieb eines Fahrsimulators weist die folgenden Schritte auf: Erfassen eines Bremswunsches in dem Fahrsimulator, insbesondere auf der Grundlage einer Betätigung eines Bremsgebers; Umwandeln des erfassten Bremswunsches in wenigstens einem Bremssignal, welches geeignet ist, den Bremswunsch zu charakterisieren; Übertragen des wenigstens einen Bremssignals von dem Fahrsimulator an einem Prüfstand, auf welchem wenigstens ein Teil eines Antriebsstrangs mit wenigstens einem Achsenabschnitt, insbesondere einer Achshälfte und wenigstens eine Bremse, welche dem wenigstens einen Achsenabschnitt zugeordnet ist, eines Fahrzeugs montiert sind; Drehen des wenigstens einen Achsenabschnitts mit einer Raddrehzahl, welche einer vorgegebenen Geschwindigkeit des Fahrzeugs entspricht; Betätigen der wenigstens einen Bremse des Fahrzeugs auf der Grundlage des wenigstens einen Bremssignals; Einstellen eines vorgegebenen Drehmoments oder einer vorgegebenen Raddrehzahl an dem wenigstens einem Achsenabschnitt mittels wenigstens eines Dynamometers auf der Grundlage von Eigenschaften von wenigstens einer Komponente des Fahrzeugs, insbesondere des Antriebsstrangs, des Fahrwerks und/oder des ganzen Fahrzeugs, wobei die Eigenschaften wenigstens teilweise simuliert werden; Erfassen der realen Raddrehzahl bei vorgegebenem Drehmoment oder des realen Drehmoments bei vorgegebener Raddrehzahl; und Ausgabe der realen Raddrehzahl oder des realen Drehmoments an den Fahrsimulator.

Die erfindungsgemäße Vorrichtung zum Prüfen einer Bremsanlage eines Fahrzeugs weist vorzugsweise einen Prüfstand auf, welcher eingerichtet ist, um ein Fahrzeug bzw. relevante Abschnitte des Fahrzeugs aufzunehmen. Dies ist wenigstens ein Teil eines Antriebsstrangs mit wenigstens einem Achsenabschnitt, insbesondere einer Achsenhälfte, und wenigstens eine Bremse, welche dem wenigstens einen Achsenabschnitt zugeordnet ist. Die Vorrichtung weist des Weiteren vorzugsweise einen Fahrzeugsimulator auf, welcher eine Sitzkiste mit einem Bremsgeber aufweist und eingerichtet ist, um eine akustische und/oder visuelle Simulation einer Bewegung des Fahrzeugs zu erzeugen und um die Sitzkiste entsprechend der Bewegung des Fahrzeugs zu bewegen. Die Sitzkiste weist insbesondere wenigstens einen Steuerstand und/oder wenigstens einen Abschnitt des Fahrzeugs auf. Zwischen dem Prüfstand und dem Fahrsimulator ist vorzugsweise eine Signalverbindung eingerichtet, um wenigstens ein Bremssignal von dem Fahrsimulator zu dem Prüfstand zu übertragen. Des Weiteren weist die Vorrichtung eine Datenverbindung auf, welche eingerichtet ist, um wenigstens Daten in Bezug auf eine reale Raddrehzahl und/oder reales Raddrehmoment von dem Prüfstand an den Fahrsimulator zu übertragen. Vorzugsweise ist wenigstens ein Dynamometer der Vorrichtung eingerichtet, um mit wenigstens einem Achsenabschnitt, insbesondere eine Achsenhälfte des Teils des Antriebsstrangs, drehfest verbunden zu werden, wobei die Vorrichtung jeweils einen Dynamometer pro zu überprüfender Bremse aufweist.

Ein Bremswunsch im Sinne der Erfindung ist eine insbesondere von dem Fahrer oder einem Fahrautomat abgegebene Anforderung einer Bremswirkung, insbesondere durch Betätigung eines Bremsgebers, beispielsweise einem Bremspedal mit einem Bremskolben.

Ein Achsenabschnitt im Sinne der Erfindung ist ein Abschnitt einer Achse, welche bei Fahrzeugen insbesondere zwei Räder an jedem Ende aufweist. Insbesondere ist ein Achsenabschnitt im Sinne der Erfindung eine Achshälfte, welche eingerichtet ist, um ein Rad zu tragen.

Ein Dynamometer im Sinne der Erfindung ist eine, vorzugsweise elektrische, Maschine, die auf den Achsenabschnitt eine positive oder negative Kraft bzw. Drehmoment aufbringen kann, also sowohl generatorisch als auch motorisch betrieben werden kann, insbesondere ein sogenannter aktiver Dynamometer. Vorzugsweise umfasst der Dynamometer einen Kraftmesser, insbesondere zum Messen eines Drehmoments.

Eine Komponente eines Fahrzeugs im Sinne der Erfindung ist ein einzelnes Bauteil oder eine Bauteilgruppe eines Fahrzeugs.

Eine Raddrehzahl im Sinne der Erfindung ist jene Drehzahl, mit der sich ein Rad, wenn dieses an einem Achsenabschnitt montiert wäre, drehen würde. Diese Drehzahl entspricht der Drehzahl, welche an dem Achsenabschnitt gemessen werden kann.

Eigenschaften von Komponenten im Sinne der Erfindung sind alle Merkmale der Komponenten, welche zum Fahrverhalten des Fahrzeugs beitragen, insbesondere deren Massen, welche bei der Verzögerung der geradlinig bewegten Massen und der rotierenden Massen ein Bremsmoment erzeugen. Eigenschaften im Sinne der Erfindung bezeichnen ganz allgemein Eingangsparameter des erfindungsgemäßen Verfahrens.

Ein Fahrzeug im Sinne der Erfindung ist ein Luft- oder Landfahrzeug, insbesondere jedoch ein Kraftfahrzeug.

Eine reale Raddrehzahl und ein reales Drehmoment im Sinne der Erfindung beinhalten Informationen über gemessene Werte der Raddrehzahl und/oder des Drehmoments an dem wenigstens einen Achsenabschnitt.

Eine Bremse im Sinne der Erfindung weist insbesondere alle Komponenten auf, die zum Abbremsen der Rotationsbewegung eines Rades bzw. eines Achsenabschnitts, insbesondere Achshälfte, benötigt werden, d.h. bei einer Scheibenbremse zumindest die Bremsscheibe und den Bremssattel mit Bremsbelägen sowie ggf. hydraulische, pneumatische und/oder federnde Elemente.

Eine Bremsanlage im Sinne der Erfindung weist zumindest eine Bremse sowie ggf. weitere Elemente zur Verbindung einer oder mehrerer Bremsen mit einem Bremsgeber auf.

Die Erfindung basiert auf dem Ansatz, ein virtuelles Fahrerlebnis eines Fahrers oder auch eines Systems zur Bewertung des Fahrverhaltens bzw. der Fahrbarkeit eines Fahrzeugs (z. B. AVL Drive) durch Einbindung von gemessenen physikalischen Werten an wenigstens einem Teil eines Antriebsstrangs eines Fahrzeugs in der Weise zu unterstützen, dass das Fahrerlebnis möglichst nahe an ein Fahrerlebnis in einem realen Fahrzeug heranreicht. Die Erfindung beruht dabei insbesondere auf der Erkenntnis, dass das Fahrverhalten eines Fahrzeugs während einer Bremsung schwierig zu simulieren ist, da die Reibungskräfte an der Bremsung beteiligten Oberflächen, z. B. der Bremsbeläge und der Bremsscheiben, insbesondere aufgrund der Vielzahl von Eingangsparametern, nicht exakt numerisch nachgebildet werden können. Zusätzlich zu der Beschaffenheit der Oberflächen kommen äußere Einflüsse, wie die realen Strömungsbedingungen an der Bremse, der Fahrtwind, die Witterungsbedingungen oder auch Einflüsse durch Verkehrsbedingungen in Abhängigkeit von Fahrgeschwindigkeit, Fahrtrichtung und Windbedingungen als schwer zu simulierende Einflussfaktoren hinzu.

Erfindungsgemäß wird das Bremsverhalten eines zu prüfenden Fahrzeugs vorzugsweises an einem Prüfstand mittels Messungen bestimmt. Auf dem Prüfstand ist dabei wenigstens ein Teil eines Antriebsstrangs, insbesondere ein Achsenabschnitt bzw. eine Achsenhälfte, insbesondere mit Radaufnahme des zu prüfenden Fahrzeugs, montiert. Eine mittels dieser realen Komponenten des Fahrzeugs durchgeführte Bremsung berücksichtigt nicht nur die reale Interaktion zwischen den Elementen der Bremse, sondern ggf. auch Abweichungen des Antriebsstrangs zu denen in einer Simulation hinterlegten Werten. Darüber hinaus können an dem gesamten Antriebsstrang oder auch im Bereich der einzelnen Bremsen reale Umgebungsbedingungen erzeugt werden, so dass auch diese Einflussfaktoren bei der Messung berücksichtigt werden können. Mit dem wenigstens einen Dynamometer des Prüfstands kann insbesondere eine Bremsung eines Vortriebs durch die Antriebsmaschine, z.B. in der Kriechfahrt eines Automatikgetriebes, oder durch eine abschüssige Strecke nachgebildet werden, vorzugsweise kann aber auch eine Bremsung ohne Vortriebskomponente auf dem Prüfstand durch den wenigstens einen Dynamometer simuliert werden.

In einer vorteilhaften Ausgestaltung des erfindungsgemäßen Verfahrens weist dieses des Weiteren den Schritt des Anpassens einer visuellen und/oder akustischen Simulation in den Fahrsimulator auf der Grundlage der realen Raddrehzahl oder des realen Drehmoments auf. Durch das Anpassen einer visuellen oder akustischen Simulation in dem Fahrsimulator kann das Fahrgefühl in dem Fahrsimulator durch visuelle und akustische Eindrücke verstärkt werden.

In einer weiteren vorteilhaften Ausgestaltung des erfindungsgemäßen Verfahrens weist dieses des Weiteren den Schritt des Bewegens einer Sitzkiste, insbesondere wenigstens eines Steuerstands und/oder wenigstens eines Abschnitts des Fahrzeugs, des Fahrsimulators, wenigstens auf der Grundlage der realen Raddrehzahl oder des realen Drehmoments, insbesondere auf der Grundlage von Beschleunigungen, welche aus der realen Raddrehzahl oder dem realen Drehmoment abgeleitet sind, auf. Insbesondere die Bewegung der Sitzkiste vermittelt ein reales Fahrgefühl in dem Fahrsimulator.

In einer weiteren vorteilhaften Ausgestaltung des erfindungsgemäßen Verfahrens weist dieses des Weiteren den Schritt des wenigstens teilweisen Simulierens der Betätigung der wenigstens einen Bremse des Fahrzeugs auf, wenn eine Begrenzung eines tatsächlichen Bremsdrucks der wenigstens einen Bremse erreicht wird. Im Falle einer Vollbremsung an dem Bremsgeber bzw. der Anforderung eines Bremswunsches, welcher eine sehr starke Bremskraft erfordern würde, können die Dynamometer überlastet und beschädigt oder wenigstens abgeschaltet werden. Daher ist es vorteilhaft, den Bremsdruck, z. B. mittels eines Ventils im Falle einer hydraulischen Bremsleitung zwischen dem Bremsgeber und den Bremsen, zu begrenzen, und jenen Teil der Bremsung, welche die Begrenzung überschreitet, zu simulieren.

Der Bremsdruck über der Begrenzung wird daher bei der Bestimmung der Werte des Bremsverhaltens nicht ausgespart, sondern so innerhalb der Fahrzeugsimulation berücksichtigt, so dass das reale Drehmoment bzw. die Raddrehzahl, welche ausgegeben wird, realistische Werte aufweist, obwohl der Bremsdruck begrenzt ist.

In einer weiteren vorteilhaften Ausgestaltung des erfindungsgemäßen Verfahrens berücksichtigt, das Einstellen des vorgegebenen Drehmoments oder der vorgegebenen zweiten Raddrehzahl an dem wenigstens einem Achsenabschnitt, des Weiteren den Luftwiderstand, den Steigungswiderstand oder den Bodenwiderstand, wobei wenigstens einer dieser Widerstände vorzugsweise simuliert wird. Im Idealfall sind alle Fahrwiderstände, welche auf das Fahrzeug bzw. dessen Komponenten wirken, bei der Ausgabe der realen Raddrehzahl oder des realen Drehmoments berücksichtigt.

In einer weiteren vorteilhaften Ausgestaltung des erfindungsgemäßen Verfahrens sind weitere Teile des Antriebsstrangs für den wenigstens einen Achsenabschnitt, vorzugsweise ein im Wesentlichen vorstehendes Fahrzeug, auf dem Prüfstand montiert.

In einer weiteren vorteilhaften Ausgestaltung des erfindungsgemäßen Verfahrens weist der wenigstens eine Teil des Antriebsstrangs eine Mehrzahl von Achsenabschnitten, welche jeweils einem Rad des Fahrzeugs zugeordnet sind, auf und das vorgegebene Drehmoment oder die vorgegebene zweite Raddrehzahl der Achsenabschnitte wird für jeden einzelnen Achsenabschnitt einzeln eingestellt. Dadurch lassen sich bei den Messungen eine unterschiedliche Verteilung des Bremsdrucks zwischen den einzelnen Bremsen oder auch verschiedene Umgebungsbedingungen, z. B. Bodenhaftung an den einzelnen Rädern bzw. Bremsen, realisieren. Auch verschiedene Verteilungen eines Vortriebs auf die einzelnen Räder lassen sich so realisieren.

In einer weiteren vorteilhaften Ausgestaltung des erfindungsgemäßen Verfahrens werden um die wenigstens eine Bremse des Fahrzeugs reale Strömungsbedingungen wenigstens eines Fluides, insbesondere Wasser und/oder Luft, nachgebildet.

In einer weiteren vorteilhaften Ausgestaltung des erfindungsgemäßen Verfahrens wird ein Fahrtwind des Fahrzeugs in Abhängigkeit von Fahrgeschwindigkeit, vorzugsweise zusätzlich von Fahrtrichtung und/oder Windbedingungen, nachgebildet.

In einer weiteren vorteilhaften Ausgestaltung des erfindungsgemäßen Verfahrens werden Witterungsbedingungen und/oder Verkehrsbedingungen um das Fahrzeug nachgebildet.

In einer weiteren vorteilhaften Ausgestaltung des erfindungsgemäßen Verfahrens werden Strömungsbedingungen um die wenigstens eine Bremse, der Fahrtwind, die Witterungsbedingungen und/oder die Verkehrsbedingungen in das Fahrzeug wenigstens teilweise simuliert.

In einer weiteren vorteilhaften Ausgestaltung des erfindungsgemäßen Verfahrens werden die Schritte des Verfahrens über einen vorgegebenen Prüfzeitraum wiederholt.

Die im Vorstehenden beschriebenen Aspekte der Erfindung und die dazugehörigen, zur Weiterbildung des Verfahrens zum Betrieb eines Fahrsimulators offenbarten Merkmale und Vorteile gelten auch für die nachstehend beschriebenen Aspekte der Erfindung und die dazugehörigen, zur Weiterbildungen der Vorrichtung zum Prüfen einer Bremsanlage offenbarten Merkmale und Vorteile entsprechend und umgekehrt.

In einer vorteilhaften Ausgestaltung der erfindungsgemäßen Vorrichtung ist der Prüfstand des Weiteren eingerichtet, um reale Strömungsbedingungen wenigstens eines Fluides, insbesondere Wasser und/oder Luft, an der wenigstens einen Bremse des Fahrzeugs nachzubilden.

In einer weiteren vorteilhaften Ausgestaltung der erfindungsgemäßen Vorrichtung weist der Fahrsimulator Mittel zur Wiedergabe einer virtuellen Realität, insbesondere eine visuelle Wiedergabevorrichtung und/oder eine Audiowiedergabevorrichtung, auf und/oder ist eingerichtet, um die Sitzkiste in wenigstens sechs räumlichen Freiheitsgraden zu bewegen.

In einer weiteren vorteilhaften Ausgestaltung der erfindungsgemäßen Vorrichtung weist der Prüfstand des Weiteren wenigstens ein Gebläse, wenigstens eine Temperiereinrichtung und/oder wenigstens eine Sprüheinrichtung auf, um die realen Strömungsbedingungen an der wenigstens einen Bremse, den Fahrtwind, die Witterungsbedingungen und/oder die Verkehrsbedingungen in Abhängigkeit von Fahrgeschwindigkeit, Fahrtrichtung, Windbedingungen, Witterungsbedingungen und/oder Verkehrsbedingungen nachzubilden.

In einer weiteren vorteilhaften Ausgestaltung der erfindungsgemäßen Vorrichtung sind wenigstens ein Gebläse, eine Temperiereinrichtung und/oder eine Sprüheinrichtung pro zu prüfender Bremse vorgesehen. Hierdurch können an jeder Bremse verschiedene Umgebungsbedingungen erzeugt werden, was eine besonders realitätsnahe Abbildung auf dem Prüfstand ermöglicht.

In einer weiteren vorteilhaften Ausgestaltung der erfindungsgemäßen Vorrichtung weist der Prüfstand ein Strömungskanal und/oder eine Kältekammer auf. Hierdurch können alle auf dem Prüfstand montierten Komponenten realistischen Betriebsszenarien unterzogen werden.

In einer weiteren vorteilhaften Ausgestaltung der erfindungsgemäßen Vorrichtung weist die Signalverbindung eine Vorrichtung zur Begrenzung eines tatsächlichen Bremsdrucks, insbesondere ein Ventil, auf. Hierdurch kann verhindert werden, dass ein oder mehrere Dynamometer aufgrund eines zu hohen Drucks so stark gebremst werden, dass diese herunterfahren müssen oder sogar beschädigt werden.

In einer weiteren vorteilhaften Ausgestaltung ist die Signalverbindung eine hydraulische Leitung und das Bremssignal ist ein hydraulischer Druck. Diese Signalverbindung ist besonders vorteilhaft, wenn auch in dem zu prüfenden Fahrzeug eine hydraulische Bremse vorgesehen ist.

In einer weiteren vorteilhaften Ausgestaltung der erfindungsgemäßen Vorrichtung weist der Fahrsimulator als Bremsgeber ein Bremspedal und einen Bremsgeberzylinder auf, welcher eingerichtet ist, um Veränderungen des Bremssignals, insbesondere eine Abschwächung und/oder Verzögerung, welche durch die Signalverbindung verursacht wird, auszugleichen. Insbesondere eine räumliche Trennung zwischen dem Fahrsimulator und dem Prüfstand kann eine längere Signalverbindung, insbesondere Bremsleitung, als im realen Fahrzeug notwendig machen. Die lange Leitung verringert bei einer hydraulischen Bremsanlage die Steifigkeit des Systems und verändert eine Wahrnehmung des Fahrers am Bremspedal. Dies kann dadurch verhindert werden, indem Änderungen an dem Bremszylinder des Bremsgebers vorgenommen werden, um dieselbe Steifigkeit wie im richtigen Betrieb zu erreichen, oder auch indem der Druck in der Bremsleitung angepasst wird oder beispielsweise über einen Druck-Repeater die zusätzliche Länge der Bremsleitung überbrückt wird.

Beispielhafte Ausführungsformen des Verfahrens zum Betrieb eines Fahrsimulators und der Vorrichtung zum Prüfen einer Bremsanlage sowie weitere Vorteile ergeben sich aus der nachfolgenden Beschreibung im Zusammenhang mit den Figuren, welche im Einzelnen zeigen:
- Figur 1: eine teilweise schematische Darstellung eines Fahrsimulators einer Ausführungsform der erfindungsgemäßen Vorrichtung zum Prüfen einer Bremsanlage;
- Figur 2a: eine teilweise schematische Darstellung einer ersten Ausführungsform der erfindungsgemäßen Vorrichtung zum Prüfen einer Bremsanlage, auf welcher ein Antriebsstrang eines Fahrzeugs mit Heckantrieb montiert ist;
- Figur 2b: eine teilweise schematische Darstellung einer zweiten Ausführungsform der erfindungsgemäßen Vorrichtung zum Prüfen einer Bremsanlage, auf welcher ein Antriebsstrang eines Fahrzeug mit Allradantrieb montiert ist; und
- Figur 3a: ein teilweise schematisches Diagramm des Informationsflusses bei dem erfindungsgemäßen Verfahren einer ersten Ausführungsform;
- Figur 3b: ein teilweise schematisches Diagramm des Informationsflusses bei dem erfindungsgemäßen Verfahren einer zweiten Ausführungsform;
- Figur 4: ein teilweise schematisches Flussdiagramm einer ersten und zweiten Ausführungsform des erfindungsgemäßen Verfahrens.

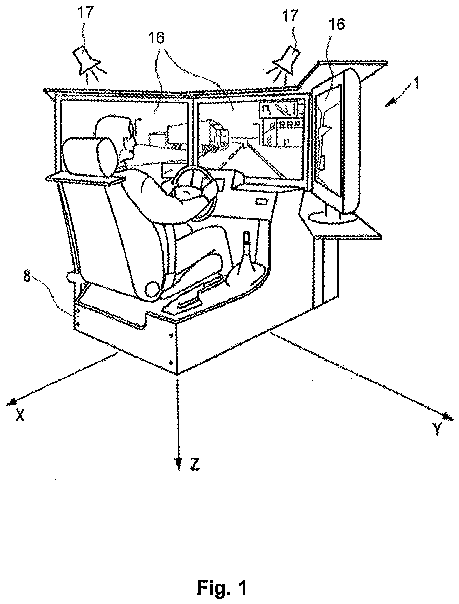

Figur 1 zeigt einen Fahrsimulator, wie er vorzugsweise bei einer Ausführungsform der erfindungsgemäßen Vorrichtung zum Prüfen einer Bremsanlage zum Einsatz kommt. Der Fahrsimulator weist vorzugsweise eine Sitzkiste 8 auf, in welcher ein Sitz für einen Fahrer befestigt ist. Des Weiteren ist die Sitzkiste 8 vorzugsweise mit Mitteln zur Wiedergabe einer virtuellen Realität ausgestattet, insbesondere mit einer oder mehreren Bildwiedergabeeinrichtungen 16, die dem Fahrer einen visuellen Eindruck einer virtuellen Realität verschaffen, und/oder akustischen Wiedergabemitteln 18, insbesondere Lautsprechern, welche dem Fahrer einen akustischen Eindruck der Umgebung vermitteln. Vorzugsweise kann die Sitzkiste 8 mittels einer Bewegungsvorrichtung (nicht dargestellt) des Fahrsimulators Translationsbewegungen in X, Y und Z-Richtung ausführen sowie Nickbewegungen um eine Achse parallel zur Y-Achse, Rollbewegungen um eine Achse parallel zur X-Achse und eine Gierbewegungen um eine Achse parallel zur Z-Achse ausführen. Vorzugsweise kann die Sitzkiste 8 auch in weitere Freiheitsgrade beweglich sein. Weiter vorzugsweise weist der Fahrsimulator 1 einen Simulationsrechner 18 auf (nicht in Fig. 1 dargestellt). Dieser kann sowohl in dem Fahrsimulator 1 integriert sein oder auch räumlich getrennt von diesem angeordnet sein.

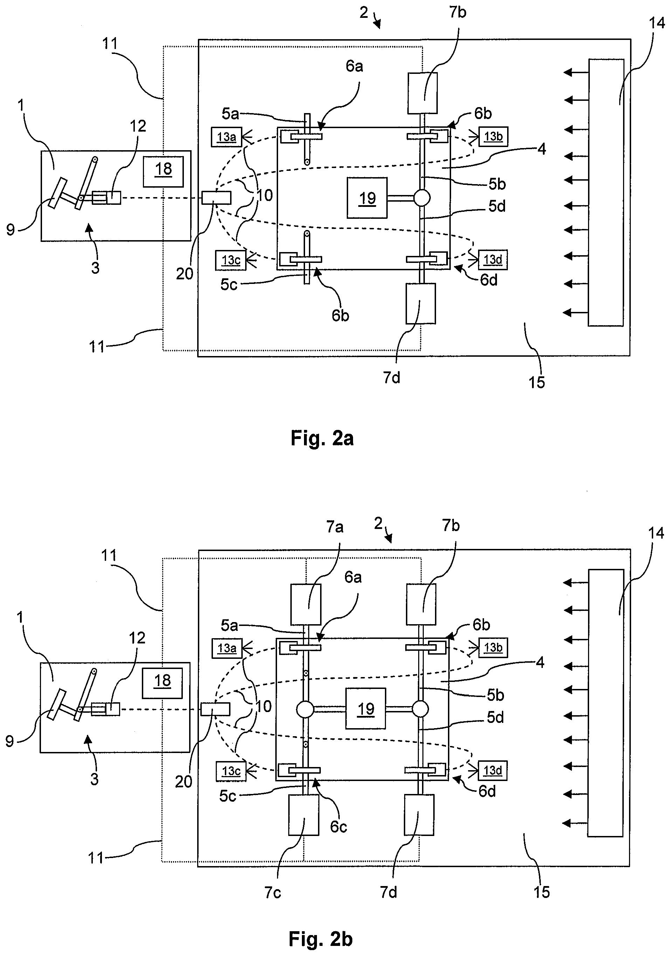

Figur 2a zeigt eine erste Ausführungsform einer Vorrichtung zum Prüfen einer Bremsanlage. Diese weist vorzugsweise einen Fahrsimulator 1 sowie einen Prüfstand 2 auf. Auf den Prüfstand 2 kann vorzugsweise ein Antriebsstrang 4 eines Fahrzeugs, dessen Bremsanlage in Bezug auf die Achsenabschnitte 5b, 5d der Hinterachse zu prüfen ist, montiert werden. Hierzu weist der Prüfstand 2 vorzugsweise jeweils einen Dynamometer 7b, 7d pro zu prüfendem Achsenabschnitt 5b, 5d, welcher insbesondere einer Achsenhälfte entspricht, bzw. der zu prüfenden Bremse 6b, 6d auf. Mittels eines Dynamometers 7b, 7d kann vorzugsweise sowohl ein vorgegebenes Drehmoment M_{def} als auch eine vorgegebene Raddrehzahl N_{def} auf den jeweiligen Achsenabschnitt 5b, 5d, vorzugsweise über die Radaufnahme, ausgeübt werden. Des Weiteren sind die jeweiligen Dynamometer 7b, 7d dazu eingerichtet, ein von dem jeweiligen Achsenabschnitt 5b, 5d ausgeübtes Drehmoment Mᵣₑₐₗ oder dessen Drehzahl Nᵣₑₐₗ messtechnisch zu bestimmen. Um den Antriebsstrang 4 möglichst gut nachbilden zu können, ist vorzugsweise des Weiteren vorgesehen, dass die Dynamometer 7b, 7d so eingestellt werden können, dass ihr Trägheitsmoment möglichst dem der Räder des Fahrzeugs mit dem Antriebsstrang 4 entspricht. Zusätzlich zu den Achsenabschnitten 5b, 5d weist der Antriebsstrang 4 wenigstens zu prüfende Bremsen 6b, 6d auf, deren Bremsscheiben an dem jeweiligen Achsenabschnitt 5b, 5d rotationsfest befestigt sind und mittels eines Bremssattels mit Bremsbacken gebremst werden. Vorzugsweise können auch andere Bremstypen wie Trommelbremsen etc. an dem Antriebsstrang 4 vorgesehen sein. Die Bremsen 6b, 6d werden über die Signalverbindung 10, insbesondere die Hydraulikleitung der Bremsanlage mittels eines Bremssignals BS, angesteuert. Vorzugsweise sind auch andere wie hydraulische Signalverbindungen 10 möglich, sowie drahtgebundene oder drahtlose Bremsanlagen mit elektrischen Motoren zum Erzeugen einer Bremskraft. In der dargestellten Ausführungsform bringen die Bremssättel über Bremsbacken eine Bremskraft auf die auf den Achsenabschnitten 5a, 5b, 5c, 5d installierten Bremsscheiben der Bremsen 6a, 6b, 6c, 6d auf. Vorzugsweise ist der Prüfstand 2 mit Vorrichtungen 13a, 13b, 13c, 13d ausgestattet, welche an jeder der Bremsen 6a, 6b, 6c, 6d jeweils reale Strömungsbedingungen, Fahrtwind und/oder Witterungsbedingungen erzeugen können und hierzu vorzugsweise ein Gebläse, eine Temperiereinrichtung und/oder eine Sprüheinrichtung aufweisen. Vorzugsweise können die Vorrichtungen 13a, 13b, 13c, 13d auch in einer Vorrichtung für den gesamten Prüfstand 2 oder in jeweils einer Vorrichtung für jede Seite des Antriebsstrangs 4 zusammengefasst sein. Vorzugsweise ist nicht nur wenigstens ein Teil des Antriebsstrangs 4, sondern der gesamte Antriebsstrang 4 und/oder Teile des Fahrwerks oder sogar das gesamte Fahrzeug sind auf dem Prüfstand 2 montierbar. Um Umgebungsbedingungen möglichst realitätsnah reproduzieren zu können, weist der Prüfstand 2 des Weiteren vorzugsweise einen Strömungskanal 14 und/oder eine Kältekammer 15 auf, in dem wenigstens der wenigstens eine Teil eines Antriebsstrangs 4 angeordnet ist.

Des Weiteren kann vorzugsweise eine nicht dargestellte Vorrichtung zur Absaugung von Bremsstaub vorgesehen werden.

Der Fahrsimulator 1 der dargestellten ersten Ausführungsform der Vorrichtung zum Prüfen einer Bremsanlage ist vorzugsweise räumlich getrennt von dem Prüfstand 2 angeordnet. Insbesondere ist der Fahrsimulator 1 in der Weise angeordnet, dass mögliche Gefahren, welche von dem Prüfstand 2 ausgehen, zum Beispiel durch Flammen und Rauch bei einem Motorbrand, keine Gefahr für einen Fahrer in dem Fahrsimulator 1 darstellen. Auf diese Weise können auch Fahrzeuge erprobt werden, die sicherheitstechnisch eigentlich noch keine Tests mit Menschen zulassen würden. Vorzugsweise weist der Simulator 1, zusätzlich zu den bereits in Bezug auf die in Figur 1 dargelegten Funktionen, auch Bedienschalter und Pedale des Fahrzeugs mit der zu prüfenden Bremsanlage auf. Insbesondere weist der Fahrsimulator 1 einen Bremsgeber 3 auf, welcher wiederum, im Falle einer dargestellten hydraulischen Bremse, vorzugsweise ein Bremspedal 9 und einen Bremsgeberzylinder 12 aufweist. Über den Bremsgeberzylinder 12 sowie die Hydraulikleitung 10 und einen Bremsdruckverteiler 20 wird ein Bremsdruck BD zu den Bremsen 6a, 6b, 6c, 6d übertragen. Weiter vorzugsweise weist der Fahrsimulator 1 einen Simulationsrechner 18 auf, welcher in dem Fahrsimulator 1 oder, wie bereits in Bezug auf Figur 1 dargelegt, räumlich getrennt von dem Fahrsimulator 1 angeordnet ist. Vorzugsweise kann der Simulationsrechner 18 auch im Bereich des Prüfstands 2 angeordnet sein. Vorzugsweise werden Achsabschnitte 5b, 5d mittels des Antriebs 19 auf eine initiale Raddrehzahl N₀ beschleunigt. Alternativ hierzu könnten aber auch die Dynamometer 7b, 7d eingesetzt werden. Der Bremsdruckverteiler 20 ist vorzugsweise des Weiteren als Vorrichtung zur Begrenzung eines tatsächlichen Bremsdruck und insbesondere im Falle einer hydraulischen Bremsanlage als Ventil ausgebildet. Weiter vorzugsweise kann/können ein solches Ventil oder mehrere Ventile zur Begrenzung des tatsächlichen Bremsdrucks auch getrennt von dem Bremsdruckverteiler 20 in den Signalverbindungen 10 angeordnet sein. Durch eine solche Vorrichtung 20 zur Begrenzung des Bremsdrucks kann verhindert werden, dass der im motorischen Betrieb befindliche wenigstens eine Dynamometer 7b, 7d durch Überlastung ausgeschaltet werden muss oder gar Schaden nimmt.

Daten, welche auf den Prüfstand 2 anfallen, können vorzugsweise mittels einer Datenverbindung 11 an den Fahrsimulator 1, insbesondere an den Simulationsrechner 18, übertragen werden. Der Simulationsrechner 18 ist vorzugsweise eingerichtet, um die Daten bei der weiteren Simulation zu berücksichtigen.

Die zweite Ausführungsform der erfindungsgemäßen Vorrichtung zum Prüfen einer Bremsanlage in Fig. 2b unterscheidet sich von dem in Fig. 2a dargestellten Aufbau im Wesentlichen dadurch, dass der Prüfstand 2 vier Dynamometer 7a, 7b, 7c, 7d aufweist. Ein solcher Aufbau eignet sich insbesondere dann, wenn ein Antriebsstrang 4 bzw. ein Fahrzeug mit Vierradantrieb oder mit straßengekoppeltem Hybridantrieb auf dem Prüfstand 2 montiert ist. Hierbei wird auch die Vorderachse mit den Achsenabschnitten bzw. Achsenhälften 5a, 5c von dem Antrieb 19, insbesondere einer Verbrennungskraftmaschine, oder einem weiteren (Elektro-)Motor betrieben. Ein Prüfstand mit einem Dynamometer 7a, 7b, 7c, 7d pro vorhandener Achshälfte bzw. Bremse 6a, 6b, 6c, 6d kann aber auch dann zum Einsatz kommen, wenn nur eine der Achsen eines Fahrzeugs motorisch angetrieben wird. Die nicht angetriebenen Achshälften bzw. Räder können in diesem Fall über Rollen oder auch den jeweiligen Dynamometer 7a, 7b, 7c, 7d gedreht werden, um eine initiale Raddrehzahl N₀ zu erreichen.

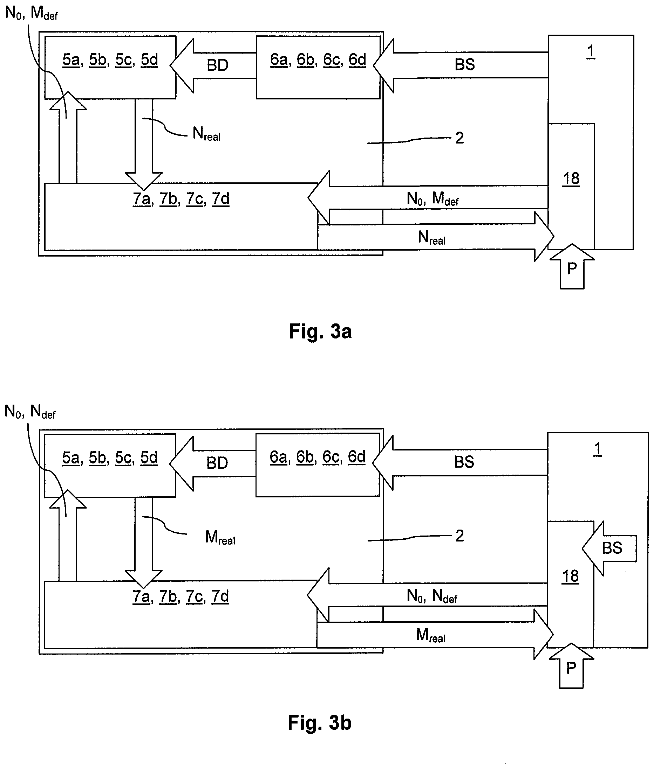

Figur 3a stellt ein Funktionsprinzip einer ersten Ausführungsform des erfindungsgemäßen Verfahrens dar. Der Simulationsrechner 18, welcher vorzugsweise Teil des Fahrsimulators 1 ist, gibt dem wenigstens einen Dynamometer 7a, 7b, 7c, 7d eine erste Raddrehzahl N₀ vor, mit welcher die Achsenabschnitte 5a, 5b, 5c, 5d gedreht werden. Der wenigstens eine Dynamometer 7a, 7b, 7c, 7d arbeitet hierbei im motorischen Betrieb. Alternativ kann die erste Raddrehzahl N₀ auch über den Antrieb 19 des Antriebsstrangs 4 des Fahrzeugs mit der zu prüfenden Bremsanlage eingestellt werden. Ist die Raddrehzahl N₀ erreicht, so übt der wenigstens eine Dynamometer 7a, 7b, 7c, 7d ein vorbestimmtes Drehmoment M_{def} auf die sich drehenden Achsenabschnitte 5a, 5b, 5c, 5d gegen die Drehrichtung aus, so dass die Drehbewegung gebremst wird. Das Drehmoment M_{def} wird hierbei von dem Simulationsrechner 18 anhand von Eigenschaften P des Fahrzeugs der zu prüfenden Bremsanlage bestimmt.

Dieses Drehmoment M_{def} wird dem wenigstens einen Dynamometer 7a, 7b, 7c, 7d vorgegeben und von diesem an dem jeweiligen Achsenabschnitt 5a, 5b, 5c, 5d eingestellt. Ein Bremswunsch des Fahrers in dem Simulator 1 wird in ein Bremssignal BS umgewandelt, welches an die Bremsen 6a, 6b, 6c, 6d weitergeleitet wird. Die Bremssattel der Bremsen 6a, 6b, 6c, 6d erzeugen einen Bremsdruck BD, welcher auf die rotationsfest mit den Achsenabschnitten 5a, 5b, 5c, 5d verbundenen Bremsscheiben ausgeübt wird, sodass die Drehung der Achsenabschnitte 5a, 5b, 5c, 5d gebremst wird. Die sich hieraus ergebende reale Raddrehzahl Nᵣₑₐₗ wird von dem wenigstens einen Dynamometer 7a, 7b, 7c, 7d oder einem weiteren Drehzahlmesser gemessen und vorzugsweise an den Simulationsrechner 18 ausgegeben, welcher die Simulation für den Fahrer in dem Fahrsimulator 1 entsprechend anpasst.

Figur 3b stellt ein Funktionsprinzip einer zweiten Ausführungsform des erfindungsgemäßen Verfahrens zum Betrieb eines Fahrsimulators dar. Im Unterschied zu der ersten Ausführungsform, welche in Bezug auf Fig. 3a erläutert ist, berechnet der Simulationsrechner 18 nicht ein vorgegebenes Drehmoment M_{def}, sondern eine vorgegebene zweite Raddrehzahl N_{def} und gibt diese an den wenigstens einen Dynamometer 7a, 7b, 7c, 7d aus. Die vorgegebene Raddrehzahl N_{def} wird hierbei auf der Grundlage der Eigenschaften P sowie auf der Grundlage eines Bremswunsches eines Fahrers im Fahrsimulator 1 erzeugten Bremssignals errechnet, welches dem Simulationsrechner 18 ebenfalls als Eingangsparameter zur Verfügung gestellt wird. Die Dynamometer 7a, 7b, 7c, 7d versuchen diese vorgegebene Raddrehzahl N_{def} zu jedem Zeitpunkt durch das Aufbringen eines Drehmoments zu erreichen. Hierdurch kann auf das reale Drehmoment Mᵣₑₐₗ geschlossen werden, welches durch den Bremsdruck von dem Bremssattel der Bremsen 6a, 6b, 6c, 6d über die Bremsscheiben auf die Achsenabschnitte 5a, 5b, 5c, 5d ausgeübt wird. Dieses reale Drehmoment Mᵣₑₐₗ wird wiederum vorzugsweise an den Simulationsrechner 18 ausgegeben, der die Simulation in dem Fahrsimulator 1 entsprechend anpasst.

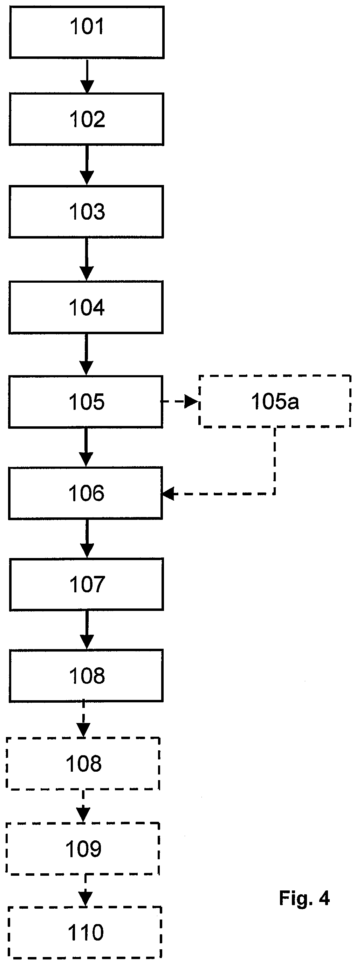

Figur 4 stellt ein Flussdiagramm der ersten und der zweiten Ausführungsform des erfindungsgemäßen Verfahrens zum Betreiben eines Fahrsimulators 1 dar. Die Schritte der Verfahren sind hierbei nicht auf die dargestellte Reihenfolge beschränkt, sondern geben vielmehr den funktionalen Zusammenhang zwischen den jeweils erfassten oder bestimmten Informationen dar, deren Funktionsprinzipien in Bezug auf die beiden Ausführungsformen in den Figuren 2a und 2b dargestellt ist.

Zunächst wird vorzugsweise ein Bremswunsch eines Fahrers in dem Fahrsimulator 1 erfasst 101, insbesondere auf der Grundlage einer Betätigung des Bremsgebers 3 durch den Fahrer, vorzugsweise des Bremspedals 9, welches auf den Bremsgeberzylinder 12 wirkt. Durch den Bremsgeber 3, insbesondere den Bremsgeberzylinder 12, wird der Bremswunsch vorzugsweise in wenigstens ein Bremssignal BS gewandelt 102, welches geeignet ist, den Bremswunsch zu charakterisieren. Dieses Bremssignal BS wird vorzugsweise von dem Fahrsimulator 1 an einen Prüfstand 2 übertragen 103, wie er im Vorherigen in Bezug auf die Figuren 2a und 2b beschrieben ist.

Um die Funktion der Bremsen 6a, 6b, 6c, 6d bzw. der gesamten Bremsanlage anhand des Bremswunsches bzw. des Bremssignals BS zu testen, wird vorzugsweise wenigstens ein Achsenabschnitt 5a, 5b, 5c, 5d auf eine erste, initiale Raddrehzahl N₀ gebracht 104. Diese erste, initiale Raddrehzahl N₀ entspricht vorzugweise einer Geschwindigkeit des Fahrzeugs, dessen Bremsen 6a, 6b, 6c, 6d bzw. dessen Bremsanlage getestet werden soll. Die erste, initiale Raddrehzahl N₀ kann hierbei durch den wenigstens einen Dynamometer 7a, 7b, 7c, 7d des Prüfstands 2 oder auch über den Antrieb 19, d.h. einen Motor des Fahrzeugs, eingestellt werden. Vorzugsweise wird die erste, initiale Raddrehzahl N₀ durch eine Simulation eines normalen Fahrbetriebs des Fahrzeugs vorgegeben.

Auf der Grundlage des generierten Bremssignals BS wird wenigstens eine Bremse 6a, 6b, 6c, 6d des Fahrzeugs betätigt 105. Die Betätigung der wenigstens einen Bremse 6a, 6b, 6c, 6d wird hierbei vorzugsweise teilweise simuliert 105a, wenn eine Begrenzung eines tatsächlichen Bremsdrucks BD der wenigstens einen Bremse 6a, 6b, 6c, 6d erreicht wird. Wie bereits erläutert, kann eine solche Begrenzung zum Schutz des wenigstens einen Dynamometers 7a, 7b, 7c, 7d notwendig sein.

Wenn der wenigstens eine Achsenabschnitt 5a, 5b, 5c, 5d mit dem wenigstens einen Dynamometer 7a, 7b, 7c, 7d oder dem Antrieb 19 auf die erste initiale Raddrehzahl N₀ gebracht wurde, geht der wenigstens eine Dynamometer 7a, 7b, 7c, 7d in einen motorischen Betrieb entgegen der Momentrichtung der Achsenabschnitte 5a, 5b, 5c, 5d und stellt entweder ein vorgegebenes Drehmoment M_{def} oder eine vorgegebene, zweite Raddrehzahl N_{def} an den wenigstens einen Achsenabschnitt 5a, 5b, 5c, 5d ein 106. Vorzugsweise wird das vorgegebene Drehmoment M_{def} oder die vorgegebene, zweite Raddrehzahl N_{def} auf der Grundlage des Trägheitsmoments der sich drehenden Komponenten des Antriebsstrangs 4 und der Trägheitsmomente der linear bewegten Komponenten des Fahrzeugs mit der zu prüfenden Bremsanlage bestimmt. Diese Trägheitsmomente und ggf. weitere Merkmale des Fahrzeugs sind vorzugsweise als Eigenschaften P zusammengefasst. Die sich aus dem Zusammenspiel der ersten initialen Raddrehzahl N₀ und des vorgegebenen Drehmoments M_{def} oder der vorgegebenen zweiten Raddrehzahl N_{def} ergebende reale Raddrehzahl Nᵣₑₐₗ (bei vorgegebenem Drehmoment M_{def}) oder das reale Drehmoment Mᵣₑₐₗ (bei vorgegebener zweiter Raddrehzahl N_{def}) wird gemessen 107 und der jeweilige Wert wird, vorzugsweise an den Fahrsimulator 1, ausgegeben 108. Vorzugsweise berücksichtigen die Trägheitsmomente bzw. die Eigenschaften P der Komponenten des Fahrzeugs auch das Gewicht von Insassen, den Füllstand eines Tanks und/oder eine Beladung des Fahrzeugs.

Vorzugsweise wird eine visuelle und/oder akustische Simulation in dem Fahrsimulator 1 auf der Grundlage der Daten der realen Raddrehzahl Nᵣₑₐₗ oder des realen Drehmoments Mᵣₑₐₗ angepasst 109. Des Weiteren wird auch die Sitzkiste 8 des Fahrsimulators 1 vorzugsweise wenigstens auf der Grundlage der Daten der realen Raddrehzahl Nᵣₑₐₗ oder des realen Drehmoments Mᵣₑₐₗ, insbesondere auf der Grundlage von Beschleunigung, welche aus der realen Radrehzahl Nᵣₑₐₗ oder dem realen Drehmoment Mᵣₑₐₗ abgeleitet sind, bewegt 110. Durch die visuelle und/oder akustische Bewegungssimulation wird eine möglichst realitätsnahe Bindung des Fahrers des Fahrverhaltens, welches durch die Bremsanlage bzw. die Bremsen 6a, 6b, 6c, 6d erzeugt wird, nachgebildet. Vorzugsweise wird beim Betätigen der wenigstens einen Bremse 6a, 6b, 6c, 6d 105 eine reale Strömungsbedingung der Luft um die Bremse nachgebildet und auch Einflüsse durch Witterungsbedingungen und Verkehrsbedingungen werden, vorzugsweise in Abhängigkeit von Fahrgeschwindigkeit, vorzugsweise zusätzlich von Fahrtrichtung und/oder Windbedingungen, nachgebildet. Hierdurch kann ein möglichst realistisches Bremsverhalten bzw. Fahrverhalten des Fahrzeugs bei einer Bremsung erreicht werden. Weitere Parameter, welche vorzugsweise in die Simulation der Eigenschaften P des Fahrzeugs eingehen oder an dem wenigstens einen Teil eines Antriebsstrangs 4 auf dem Prüfstand 2 real eingestellt werden, sind Lenkwinkel, Kupplungsstellung, Schaltanforderungen, Einstellungen der Motorsteuerung und Drosselklappenstellungen sowie vorzugsweise weitere Parameter. Zum einen ermöglicht dies, nicht nur die Bremsanlage, sondern weitere Komponenten des Fahrzeugs zu testen, zum anderen nähern sich die erzeugten Daten, je realistischer die Nachbildung des Fahrzeugs und der Umgebung in der Simulation und/oder auf dem Prüfstand 2 ist, immer weiter den Werten im realen Fahrbetrieb an.

Durch die erfindungsgemäße Vorrichtung zum Prüfen einer Bremsanlage und das Verfahren zum Betrieb eines Fahrsimulators 1 hat der Fahrer die volle Kontrolle über die Bremskraft auf die Bremsscheiben und erhält eine direkte Rückmeldung von der sich drehenden oder blockierten Bremsscheibe und der daraus resultierenden Bremsleistung, da das gemessene Bremsmoment Mᵣₑₐₗ bzw. die zweite reale Raddrehzahl Nᵣₑₐₗ in das Fahrzeugmodell des Fahrzeugsimulators 1 eingegeben wird. Dies ermöglicht es, die gesamte Bremsanlage, die Bremsscheibe und/oder den Bremssattel in Bezug auf Steuerbarkeit mit einer direkten Fahrerrückmeldung zu prüfen und zu entwickeln, ohne dass hierfür Fahrtests auf einer realen Teststrecke durchgeführt werden müssen. Zum einen erspart dies teure Testzeit, zum anderen kann das Prüfen der Bremseigenschaften des Fahrzeugs schon in einem frühen Entwicklungsstadium unter nahezu realen Bedingungen vorgenommen werden, in welchen beispielsweise noch kein Gesamtfahrzeug konstruiert ist oder zumindest noch nicht als Prototyp vorliegt.

**Bezugszeichenliste**

| | |
|---|---|
| Fahrsimulator | 1 |
| Prüfstand | 2 |
| Bremsgeber | 3 |
| Antriebsstrang | 4 |
| Achsenabschnitt | 5a, 5b, 5c, 5d |
| Bremse | 6a, 6b, 6c, 6d |
| Dynamometer | 7a, 7b, 7c, 7d |
| Sitzkiste | 8 |
| Bremspedal | 9 |
| Signalverbindung | 10 |
| Datenverbindung | 11 |
| Bremsgeberzylinder | 12 |
| Gebläse/ Temperiereinrichtung/ Sprüheinrichtung | 13a, 13b, 13c, 13d |
| Strömungskanal | 14 |
| Kältekammer | 15 |
| Mittel zur Wiedergabe einer virtuellen Realität | 16, 17 |
| Simulationsrechner | 18 |
| Antrieb | 19 |
| Bremsdruckverteiler, Ventil | 20 |
| Eigenschaften | P |
| Bremssignal | BS |
| Bremsdruck | BD |
| Initiale erste Raddrehzahl | N₀ |
| Vorgegebene zweite Raddrehzahl | N_{def} |
| Reale Raddrehzahl | Nᵣₑₐₗ |
| Vorgegebenes Drehmoment | M_{def} |
| Reales Drehmoment | Mᵣₑₐₗ |

## Patentansprüche

1. Verfahren (100) zum Betrieb eines Fahrsimulators (1), welches die folgenden Schritte aufweist:
• Erfassen (101) eines Bremswunsches in dem Fahrsimulator (1), insbesondere auf der Grundlage einer Betätigung eines Bremsgebers (3);
• Umwandeln (102) des erfassten Bremswunsches in wenigstens ein Bremssignal (BS), welches geeignet ist, den Bremswunsch zu charakterisieren;
• Übertragen (103) des wenigstens einen Bremssignals (BS) von dem Fahrsimulator (1) an einen Prüfstand (2), auf welchem wenigstens ein Teil eines Antriebsstrangs (4) mit wenigstens einem Achsenabschnitt (5a, 5b, 5c, 5d), insbesondere einer Achshälfte, und wenigstens eine Bremse (6a, 6b, 6c, 6d), welche dem wenigstens einen Achsenabschnitt (5a, 5b, 5c, 5d) zugordnet ist, eines Fahrzeugs montiert sind;
• Drehen (104) des wenigstens einen Achsenabschnitts (5a, 5b, 5c, 5d) mit einer ersten Raddrehzahl (N₀), welche einer vorgegebenen Geschwindigkeit des Fahrzeugs entspricht;
• Betätigen (105) der wenigstens einen Bremse (6a, 6b, 6c, 6d) des Fahrzeugs auf der Grundlage des wenigstens einen Bremssignals (BS);
• Einstellen (106) eines vorgegebenen Drehmoments (M_{def}) oder einer vorgegebenen zweiten Raddrehzahl (N_{def}) an dem wenigstens einen Achsenabschnitt (5a, 5b, 5c, 5d) mittels wenigstens eines Dynamometers (7a, 7b, 7c, 7d) auf der Grundlage von Eigenschaften (P) von wenigstens einer Komponente des Fahrzeugs, insbesondere des Antriebsstrangs (4), des Fahrwerks und/oder des ganzen Fahrzeugs, wobei die Eigenschaften (P) wenigstens teilweise simuliert werden;
• Erfassen (107) der realen Raddrehzahl (Nᵣₑₐₗ) bei vorgegebenem Drehmoment (M_{def}) oder des realen Drehmoments (Mᵣₑₐₗ) bei vorgegebener zweiter Raddrehzahl (N_{def}); und
• Ausgabe (108) von Daten der realen Raddrehzahl (Nᵣₑₐₗ) oder des realen Drehmoments (Mᵣₑₐₗ) an den Fahrsimulator (1).

2. Verfahren (100) nach Anspruch 1, des Weiteren folgenden Schritt aufweisend:
• Anpassen (109) einer visuellen und/oder akustischen Simulation in dem Fahrsimulator (1) auf der Grundlage der Daten der realen Raddrehzahl (Nᵣₑₐₗ) oder des realen Drehmoments (Mᵣₑₐₗ).

3. Verfahren (100) nach Anspruch 1 oder 2, des Weiteren folgenden Schritt aufweisend:
• Bewegen (110) einer Sitzkiste (8), insbesondere wenigstens eines Steuerstands und/oder wenigstens eines Abschnitts des Fahrzeugs, des Fahrsimulators (1) wenigstens auf der Grundlage der Daten der realen Raddrehzahl (Nᵣₑₐₗ) oder des realen Drehmoments (Mᵣₑₐₗ), insbesondere auf der Grundlage von Beschleunigungen, welche aus der realen Raddrehzahl (Nᵣₑₐₗ) oder dem realen Drehmoment (Mᵣₑₐₗ) abgeleitet sind.

4. Verfahren (100) nach einem der vorhergehenden Ansprüche, des Weiteren folgenden Schritt aufweisend:
• wenigstens teilweises Simulieren (105a) der Betätigung der wenigstens einen Bremse (6a, 6b, 6c, 6d) des Fahrzeugs, wenn eine Begrenzung eines tatsächlichen Bremsdrucks (BD) der wenigstens einen Bremse (6a, 6b, 6c, 6d) erreicht wird.

5. Verfahren (100) nach einem der vorhergehenden Ansprüche, wobei das Einstellen (106) des vorgegebenen Drehmoments (M_{def}) oder der vorgegebenen zweiten Raddrehzahl (N_{def}) an dem wenigstens einen Achsenabschnitt (5a, 5b, 5c, 5d) des Weiteren den Luftwiderstand, den Steigungswiderstand und/oder den Bodenwiderstand berücksichtigt, wobei wenigstens einer dieser Widerstände vorzugsweise simuliert wird.

6. Verfahren (100) nach einem der vorhergehenden Ansprüche, wobei weitere Teile des Antriebsstrangs (4) für den wenigstens einen Achsenabschnitt (5a, 5b, 5c, 5d), vorzugsweise ein im Wesentlichen vollständiges Fahrzeug, auf dem Prüfstand (2) montiert sind.

7. Verfahren (100) nach einem der vorhergehenden Ansprüche, wobei der wenigstens eine Teil des Antriebsstrangs (4) eine Mehrzahl von Achsenabschnitten (5a, 5b, 5c, 5d), welche jeweils einem Rad des Fahrzeugs zugeordnet sind, aufweist und wobei das vorgegebene Drehmoment (M_{def}) oder die vorgegebene zweite Raddrehzahl (N_{def}) der Achsenabschnitte für jeden einzelnen Achsenabschnitt einzeln eingestellt (106) wird.

8. Vorrichtung zum Prüfen einer Bremsanlage eines Fahrzeugs aufweisend:
einen Prüfstand (2), eingerichtet, um wenigstens einen Teil eines Antriebsstrangs mit wenigstens einem Achsenabschnitt (5a, 5b, 5c, 5d), insbesondere einer Achshälfte, und wenigstens eine Bremse (6a, 6b, 6c, 6d), welche dem wenigstens einen Achsenabschnitt (5a, 5b, 5c, 5d) zugeordnet ist, des Fahrzeugs aufzunehmen, und
einen Fahrsimulator (1), welcher eine Sitzkiste (8) mit einem Bremsgeber (3) aufweist und eingerichtet ist, um eine akustische und/oder visuelle Simulation einer Bewegung des Fahrzeugs zu erzeugen und um die Sitzkiste (8), insbesondere wenigstens ein Steuerstand und/oder wenigstens ein Abschnitt des Fahrzeugs, entsprechend der Bewegung des Fahrzeugs zu bewegen,
eine Signalverbindung (10) zwischen dem Prüfstand (2) und dem Fahrsimulator (1), eingerichtet, um wenigstens ein Bremssignal von dem Fahrsimulator (1) zu dem Prüfstand (2) zu übertragen,
eine Datenverbindung (11), eingerichtet, um wenigstens Daten in Bezug auf eine reale Raddrehzahl (Nᵣₑₐₗ) und/oder ein reales Drehmoment (Mᵣₑₐₗ) von dem Prüfstand (2) an den Fahrsimulator (1) zu übertragen, und
wenigstens einen Dynamometer (7a, 7b, 7c, 7d) eingerichtet, um mit wenigstens einem Achsenabschnitt (5a, 5b, 5c, 5d), insbesondere einer Achshälfte, des Teils des Antriebsstrangs (4) drehfest verbunden zu werden, wobei die Vorrichtung einen Dynamometer (7a, 7b, 7c, 7d) pro zu prüfender Bremse (6a, 6b, 6c, 6d) aufweist, wobei der Prüfstand eingerichtet ist, die wenigstens eine Bremse (6a, 6b, 6c, 6d) des Fahrzeugs auf der Grundlage des wenigstens einen Bremssignals (BS) zu betätigen.

9. Vorrichtung nach Anspruch 8, wobei der Prüfstand (2) des Weiteren eingerichtet ist, um reale Strömungsbedingungen wenigstens eines Fluides, insbesondere Wasser und/oder Luft, an der wenigstens einen Bremse (6a, 6b, 6c, 6d) des Fahrzeugs nachzubilden.

10. Vorrichtung nach einem der Ansprüche 8 oder 9, wobei der Prüfstand des Weiteren wenigstens ein Gebläse (13a, 13b, 13c, 13d), wenigstens eine Temperiereinrichtung (14a, 14b, 14c, 14d), und/oder wenigstens eine Sprüheinrichtung (15a, 15b, 15c, 15d) aufweist, um die realen Strömungsbedingungen an der wenigstens einen Bremse (6a, 6b, 6c, 6d), den Fahrtwind, die Witterungsbedingungen und/oder die Verkehrsbedingungen in Abhängigkeit von Fahrgeschwindigkeit, Fahrtrichtung und Windbedingungen, Witterungsbedingungen und/oder Verkehrsbedingungen nachzubilden.

11. Vorrichtung nach einem der Ansprüche 8 bis 10, wobei wenigstens ein Gebläse (13a, 13b, 13c, 13d), eine Temperiereinrichtung (14a, 14b, 14c, 14d), und/oder eine Sprüheinrichtung (15a, 15b, 15c, 15d) pro zu prüfender Bremse (6a, 6b, 6c, 6d) vorgesehen ist.

12. Vorrichtung nach einem der Ansprüche 8 bis 11, wobei der Prüfstand einen Strömungskanal 16 und/oder eine Kältekammer 17 aufweist.

13. Vorrichtung nach einem der Ansprüche 8 bis 12, wobei die Signalverbindung eine Vorrichtung zur Begrenzung eines tatsächlichen Bremsdrucks (20), insbesondere ein Ventil, aufweist.

14. Vorrichtung nach einem der Ansprüche 8 bis 13, wobei die Signalverbindung (10) eine hydraulische Leitung ist und das Bremssignal ein hydraulischer Druck ist.

15. Vorrichtung nach Anspruch 14, wobei der Fahrsimulator (1) als Bremsgeber (3) ein Bremspedal (9) und einen Bremsgeberzylinder (12) aufweist, welcher eingerichtet ist, um Veränderungen des Bremssignals, insbesondere eine Abschwächung und/oder Verzögerung, welche durch die Signalverbindung (10) verursacht wird, auszugleichen.

## Claims

1. A method (100) for operating a driving simulator (1) which comprises the following steps:
• detecting (101) a braking request in the driving simulator (1), in particular on the basis of actuation of a brake actuator (3);
• converting (102) the detected braking request into at least one braking signal (BS) suitable for characterizing the braking request;
• transmitting (103) the at least one braking signal (BS) from the driving simulator (1) to a test bench (2) on which are mounted at least part of a drivetrain (4) of a vehicle having at least one axle section (5a, 5b, 5c, 5d), in particular an axle half, and at least one brake (6a, 6b, 6c, 6d) associated with the at least one axle section (5a, 5b, 5c, 5d);
• rotating (104) the at least one axle section (5a, 5b, 5c, 5d) at a first wheel speed (N₀) which corresponds to a predefined speed of the vehicle;
• actuating (105) the at least one brake (6a, 6b, 6c, 6d) of the vehicle on the basis of the at least one braking signal (BS);
• setting (106) a predefined torque (M_{def}) or a predefined second wheel speed (N_{def}) at the at least one axle section (5a, 5b, 5c, 5d) by means of at least one dynamometer (7a, 7b, 7c, 7d) based on properties (P) of at least one component of the vehicle, in particular the drivetrain (4), the chassis and/or of the entire vehicle, wherein the properties (P) are at least partially simulated;
• detecting (107) the actual wheel speed (Nᵣₑₐₗ) at a predefined torque (M_{def}) or the actual torque (Mᵣₑₐₗ) at a predefined second wheel speed (N_{def}); and
• outputting (108) data on the actual wheel speed (Nᵣₑₐₗ) or the actual torque (Mᵣₑₐₗ) to the driving simulator (1).

2. The method (100) according to claim 1, further comprising the following step:
• adapting (109) a visual and/or acoustic simulation in the driving simulator (1) based on the data on the actual wheel speed (Nᵣₑₐₗ) or the actual torque (Mᵣₑₐₗ).

3. The method (100) according to claim 1 or 2, further comprising the following step:
• moving (110) a seat box (8) of the driving simulator (1), in particular at least one control station and/or at least one section of the vehicle, at least on the basis of the data on the actual wheel speed (Nᵣₑₐₗ) or the actual torque (Mᵣₑₐₗ), in particular on the basis of accelerations derived from the actual wheel speed (Nᵣₑₐₗ) or the actual torque (Mᵣₑₐₗ).

4. The method (100) according to one of the preceding claims, further comprising the following step:
• at least partially simulating (105a) the actuation of the at least one brake (6a, 6b, 6c, 6d) of the vehicle upon a limit of an actual braking pressure (BP) of the at least one brake (6a, 6b, 6c, 6d) being reached.

5. The method (100) according to one of the preceding claims, wherein the setting (106) of the predefined torque (M_{def}) or the predefined second wheel speed (N_{def}) at the at least one axle section (5a, 5b, 5c, 5d) further takes into account aerodynamic drag, climbing resistance and/or ground resistance, wherein at least one of these resistances is preferably simulated.

6. The method (100) according to one of the preceding claims, wherein additional parts of the drivetrain (4) for the at least one axle section (5a, 5b, 5c, 5d) of a preferably substantially complete vehicle are mounted on the test bench (2).

7. The method (100) according to one of the preceding claims, wherein the at least one part of the drivetrain (4) comprises a plurality of axle sections (5a, 5b, 5c, 5d), each associated with one respective wheel of the vehicle, and wherein the predefined torque (M_{def}) or the predefined second wheel speed (N_{def}) of the axle section is individually set (106) for each individual axle section.

8. An apparatus for testing a brake assembly of a vehicle comprising:
a test bench (2) configured to accommodate at least part of a drivetrain (4) of the vehicle having at least one axle section (5a, 5b, 5c, 5d), in particular an axle half, and at least one brake (6a, 6b, 6c, 6d) associated with the at least one axle section (5a, 5b, 5c, 5d), and
a driving simulator (1) comprising a seat box (8) having a brake actuator (3) and configured to generate an acoustic and/or visual simulation of movement of the vehicle and to move the seat box (8), in particular at least one control station and/or at least one section of the vehicle, commensurate to the vehicle movement,
a signal connection (10) established between the test bench (2) and the driving simulator (1) for transmitting at least one braking signal from the driving simulator (1) to the test bench (2),
a data connection (11) provided to transmit at least data related to actual wheel speed (Nᵣₑₐₗ) and/or actual torque (Mᵣₑₐₗ) from the test bench (2) to the driving simulator (1), and
at least one dynamometer (7a, 7b, 7c, 7d) configured so as to be torque-proofly connected to at least one axle section (5a, 5b, 5c, 5d), in particular an axle half, of the section of the drivetrain (4), wherein the apparatus has one respective dynamometer (7a, 7b, 7c, 7d) per each brake (6a, 6b, 6c, 6d) to be tested, wherein the test bench (2) is configured so as to actuate the at least one break (6a, 6b, 6c, 6d) of the vehicle on the basis of the at least one braking signal (BS).

9. The apparatus according to claim 8, wherein the test bench (2) is further equipped to simulate actual flow conditions of at least one fluid, in particular water and/or air, on the at least one brake (6a, 6b, 6c, 6d) of the vehicle.

10. The apparatus according to one of claims 8 or 9, wherein the test bench further comprises at least one fan (13a, 13b, 13c, 13d), at least one temperature control device (14a, 14b, 14c, 14d) and/or at least one sprayer device (15a, 15b, 15c, 15d) in order to simulate the actual flow conditions on the at least one brake (6a, 6b, 6c, 6d), the airflow, the climatic conditions and/or the traffic conditions as a function of driving speed, direction of motion and wind conditions, climatic conditions and/or traffic conditions.

11. The apparatus according to one of claims 8 to 9, wherein at least one fan (13a, 13b, 13c, 13d), one temperature control device (14a, 14b, 14c, 14d) and/or one sprayer device (15a, 15b, 15c, 15d) is provided per each brake (6a, 6b, 6c, 6d) to be tested.

12. The apparatus according to one of claims 8 to 11, wherein the test bench (2) comprises a flow channel 16 and/or a cold chamber 17.

13. The apparatus according to one of claims 8 to 12, wherein the signal connection comprises an apparatus (20), in particular a valve, for limiting an actual braking pressure.

14. The apparatus according to one of claims 8 to 13, wherein the signal connection (10) is a hydraulic line and the braking signal is a hydraulic pressure.

15. The apparatus according to claim 14, wherein the driving simulator (1) comprises a brake pedal (9) and a brake actuator cylinder (12) as a brake actuator (3) which is configured to adjust for changes in the braking signal, in particular an attenuating and/or delay induced by the signal connection (10).

## Revendications

1. Procédé (100) servant à faire fonctionner un simulateur de conduite (1), lequel présente les étapes suivantes :
- la détection (101) d'un souhait de freinage dans le simulateur de conduite (1), en particulier sur la base d'un actionnement d'un capteur de freinage (3) ;
- la transformation (102) du souhait de freinage détecté en au moins un signal de freinage (BS), lequel est adapté pour caractériser le souhait de freinage ;
- la transmission (103) de l'au moins un signal de freinage (BS) par le simulateur de conduite (1) à un banc d'essai (2), sur lequel sont montés au moins une partie d'une chaîne cinématique (4) avec au moins une section d'essieu (5a, 5b, 5c, 5d), en particulier une moitié d'essieu, et au moins un frein (6a, 6b, 6c, 6d), lequel est associé à l'au moins une section d'essieu (5a, 5b, 5c, 5d) ;
- la rotation (104) de l'au moins une section d'essieu (5a, 5b, 5c, 5d) avec une première vitesse de rotation de roue (N₀), laquelle correspond à une vitesse prédéfinie du véhicule ;
- l'actionnement (105) de l'au moins un frein (6a, 6b, 6c, 6d) du véhicule sur la base de l'au moins un signal de freinage (BS) ;
- le réglage (106) d'un couple de rotation prédéfini (M_{def}) ou d'une deuxième vitesse de rotation prédéfinie (N_{def}) au niveau de l'au moins une section d'essieu (5a, 5b, 5c, 5d) au moyen d'au moins un dynamomètre (7a, 7b, 7c, 7d) sur la base de propriétés (P) d'au moins un composant du véhicule, en particulier de la chaîne cinématique (4), du train de roulement et/ou de la totalité du véhicule, dans lequel les propriétés (P) sont simulées au moins en partie ;
- la détection (107) de la vitesse de rotation de roue réelle (Nᵣₑₐₗ) lors d'un couple de rotation prédéfini (M_{def}) ou du couple de rotation réel (Mᵣₑₐₗ) lors d'une deuxième vitesse de rotation de roue prédéfinie (N_{def}) ; et
- l'édition (108) de données de la vitesse de rotation de roue réelle (Nᵣₑₐₗ) ou du couple de rotation réel (Mᵣₑₐₗ) au niveau du simulateur de conduite (1).

2. Procédé (100) selon la revendication 1, présentant par ailleurs l'étape suivante :
- d'adaptation (109) d'une simulation visuelle et/ou acoustique dans le simulateur de conduite (1) sur la base des données de la vitesse de rotation de roue réelle (Nᵣₑₐₗ) ou du couple de rotation réel (Mᵣₑₐₗ).

3. Procédé (100) selon la revendication 1 ou 2, présentant par ailleurs l'étape suivante :
- de déplacement (110) d'un coffre de siège (8), en particulier d'au moins un poste de commande et/ou d'au moins une section du véhicule, du simulateur de conduite (1) au moins sur la base des données de la vitesse de rotation de roue réelle (Nᵣₑₐₗ) ou du couple de rotation réel (Mᵣₑₐₗ), en particulier sur la base d'accélérations, lesquelles sont déduites de la vitesse de rotation de roue réelle (Nᵣₑₐₗ) ou du couple de rotation réel (Mᵣₑₐₗ).

4. Procédé (100) selon l'une quelconque des revendications précédentes, présentant par ailleurs l'étape suivante :
- de simulation (105a) au moins en partie de l'actionnement de l'au moins un frein (6a, 6b, 6c, 6d) du véhicule quand une limitation d'une pression de freinage effective (BD) de l'au moins un frein (6a, 6b, 6c, 6d) est atteinte.

5. Procédé (100) selon l'une quelconque des revendications précédentes, dans lequel le réglage (106) du couple de rotation prédéfini (M_{def}) ou de la deuxième vitesse de rotation de roue prédéfinie (N_{def}) au niveau de l'au moins une section d'essieu (5a, 5b, 5c, 5d) tient compte par ailleurs de la résistance à l'air, de la résistance à la montée et/ou de la résistance du sol, dans lequel au moins une desdites résistances est de préférence simulée.

6. Procédé (100) selon l'une quelconque des revendications précédentes, dans lequel d'autres parties de la chaîne cinématique (4) pour l'au moins une section d'essieu (5a, 5b, 5c, 5d), de préférence un véhicule sensiblement complet, sont montés sur le banc d'essai (2).

7. Procédé (100) selon l'une quelconque des revendications précédentes, dans lequel l'au moins une partie de la chaîne cinématique (4) présente une multitude de sections d'essieu (5a, 5b, 5c, 5d), lesquelles sont associées respectivement à une roue du véhicule et dans lequel le couple de rotation prédéfini (M_{def}) ou la deuxième vitesse de rotation de roue prédéfinie (N_{def}) des sections d'essieu est réglé ou réglée (106) individuellement pour chaque section d'essieu individuelle.

8. Dispositif servant à contrôler un système de freinage d'un véhicule présentant :
un banc d'essai (2) mis au point pour accueillir au moins une partie d'une chaîne cinématique avec au moins une section d'essieu (5a, 5b, 5c, 5d), en particulier une moitié d'essieu, et au moins un frein (6a, 6b, 6c, 6d), lequel est associé à l'au moins une section d'essieu (5a, 5b, 5c, 5d), du véhicule et
un simulateur de conduite (1), lequel présente un coffre de siège (8) avec un capteur de freinage (3) et qui est mis au point pour générer une simulation acoustique et/ou visuelle d'un déplacement du véhicule et pour déplacer le coffre de siège (8), en particulier au moins un poste de commande et/ou au moins une section du véhicule, conformément au déplacement du véhicule,
une liaison de signaux (10) entre le banc d'essai (2) et le simulateur de conduite (1) mise au point pour transmettre au moins un signal de freinage du simulateur de conduite (1) au banc d'essai (2),
une liaison de données (11) mise au point pour transmettre au moins des données concernant une vitesse de rotation de roue réelle (Nᵣₑₐₗ) et/ou un couple de rotation réel (Mᵣₑₐₗ) du banc d'essai (2) au simulateur de conduite (1), et
au moins un dynamomètre (7a, 7b, 7c, 7d) mis au point pour être relié de manière solidaire en rotation à au moins une section d'essieu (5a, 5b, 5c, 5d), en particulier une moitié d'essieu, de la partie de la chaîne cinématique (4), dans lequel le dispositif présente un dynamomètre (7a, 7b, 7c, 7d) par frein (6a, 6b, 6c, 6d) à contrôler, dans lequel le banc d'essai est mis au point pour actionner l'au moins un frein (6a, 6b, 6c, 6d) du véhicule sur la base de l'au moins un signal de freinage (BS).

9. Dispositif selon la revendication 8, dans lequel le banc d'essai (2) est mis au point par ailleurs pour reproduire des conditions d'écoulement réelles d'au moins un fluide, en particulier de l'eau et/ou de l'air, au niveau de l'au moins un frein (6a, 6b, 6c, 6d) du véhicule.

10. Dispositif selon l'une quelconque des revendications 8 ou 9, dans lequel le banc d'essai présente par ailleurs au moins une soufflante (13a, 13b, 13c, 13d), au moins un système de thermorégulation (14a, 14b, 14c, 14d) et/ou au moins un système de pulvérisation (15a, 15b, 15c, 15d) pour reproduire les conditions d'écoulement réelles au niveau de l'au moins un frein (6a, 6b, 6c, 6d), le courant d'air, les conditions météorologiques et/ou les conditions de circulation en fonction de la vitesse de déplacement, de la direction de déplacement et des conditions du vent, des conditions météorologiques et/ou des conditions de circulation.

11. Dispositif selon l'une quelconque des revendications 8 à 10, dans lequel au moins une soufflante (13a, 13b, 13c, 13d), un système de thermorégulation (14a, 14b, 14c, 14d) et/ou un système de pulvérisation (15a, 15b, 15c, 15d) sont prévus par frein (6a, 6b, 6c, 6d) à contrôler.

12. Dispositif selon l'une quelconque des revendications 8 à 11, dans lequel le banc d'essai présente un canal d'écoulement (16) et/ou une chambre froide (17).

13. Dispositif selon l'une quelconque des revendications 8 à 12, dans lequel la liaison de signaux présente un dispositif servant à limiter une pression de freinage effective (20), en particulier une soupape.

14. Dispositif selon l'une quelconque des revendications 8 à 13, dans lequel la liaison de signaux (10) est un conduit hydraulique et le signal de freinage est une pression hydraulique.

15. Dispositif selon la revendication 14, dans lequel le simulateur de conduite (1) présente en tant que capteur de freinage (3) une pédale de freinage (9) et un cylindre de capteur de freinage (12), lequel est mis au point pour compenser des modifications du signal de freinage, en particulier un affaiblissement et/ou un retard, qui sont provoqués par la liaison de signaux (10).
